# EUROPEAN PATENT APPLICATION

(11) **EP 4 733 029 A1**
(43) Date of publication of application: **29.04.2026**
(21) Application number: 25209961.9
(22) Date of filing: 21.10.2025
(51) Int. Cl.: B29C 35/02, A21B 1/48, B65G 21/18

(54) **SPIRAL DUCT AND SPIRAL OVEN**

(30) Priority: 22.10.2024 SG 10202403275
(71) Applicant: HYC (Singapore), Inc. Pte. Ltd., 368324 Singapore (SG)
(72) Inventor: NG, Alex Liang Seng, 368324 Singapore (SG); WONG, Chang Choy, 368324 Singapore (SG); TAN, Je Sean, 368324 Singapore (SG); TALANDRON, John Paul Sieton, 368324 Singapore (SG); TENG, Jwo Shi, 368324 Singapore (SG)
(74) Representative: Marks & Clerk LLP

(57) **Abstract**

The present invention provides a spiral duct (10), which comprises a plurality of enclosed chambers (20). Each of the enclosed chambers is assembled sequentially to form a spiral path. A conveyor belt (25) is encapsulated within the plurality of enclosed chambers (20) along the spiral path.

## Description

### Field of Invention

The invention relates to heating and curing ovens and the duct used therein. Particularly, the invention relates to a spiral duct and a spiral oven incorporating the spiral duct.

### Background

In the heating and curing oven industry, some products or materials may require multiple temperature zones and a specific temperature profile in an oven to ensure a proper processing of the materials and achieve the desired output. Industrial ovens generally have limited number of temperature zones, which is unable to accommodate the processing requirements for these types of products or materials.

Therefore, it would be advantageous to introduce a spiral oven that provides multiple temperature zones, which can accommodate the processing of those products and materials.

### Summary of Invention

In a first aspect, the present invention provides a spiral duct. The spiral duct comprises a plurality of enclosed chambers. Each of the enclosed chambers is assembled sequentially to form a spiral path. A conveyor belt is encapsulated within the plurality of enclosed chambers along the spiral path.

The enclosed design of the chamber serves as a heat barrier to confine heated air within the chamber. Accordingly, the heat transfer from the heated air at the interior of the chamber to the cooler air at its exterior is minimized.

In one embodiment, each of at least a portion of the plurality of enclosed chambers has a heating element to heat up the interior of the each of the portion of the plurality of enclosed chambers.

Further, the heating element may comprise radiant heating to heat up the interior of the each of the portion of the plurality of enclosed chambers through radiant.

Further, the heating element may comprise UV curing to heat up the interior of the each of the portion of the plurality of enclosed chambers through UV.

Further, each of the portion of the plurality of enclosed chambers may further include a duct cover removably attached to the each of the portion of the plurality of enclosed chambers, and the duct cover is configured to cover a duct opening of the each of the portion of the plurality of enclosed chambers.

Further, each of the plurality of enclosed chambers may have an opening to allow the conveyor belt to move through.

Further, each of the plurality of enclosed chambers may have a C-shaped mounting plate to connect the each of the plurality of enclosed chambers with another enclosed chamber.

Further, each of the plurality of enclosed chambers may form a helical segment of the spiral path.

In a second aspect, the present invention provides a spiral oven having at least one spiral duct. The spiral oven further comprises a housing. The at least one spiral duct is enclosed within the housing. The housing has an entrance and an exit connected to the conveyor belt.

In one embodiment, the spiral oven may further comprise a control system configured to individually control the heating element.

### Brief Description of Drawings

It will be convenient to further describe the present invention with respect to the accompanying drawings that illustrate possible arrangements of the invention. Other arrangements of the invention are possible, and consequently the particularity of the accompanying drawings is not to be understood as superseding the generality of the preceding description of the invention.
Figure 1 shows a schematic view of a spiral oven according to one embodiment of the present invention.
Figures 2A-2C show schematic views of a spiral duct with different number of temperature zones.
Figure 3 shows a schematic view of a chamber according to one embodiment of the present invention.
Figure 4A-4D show top views of a spiral oven having various number of spiral ducts.

Similar reference characters denote corresponding features consistently throughout the attached drawings.

### Detailed Description

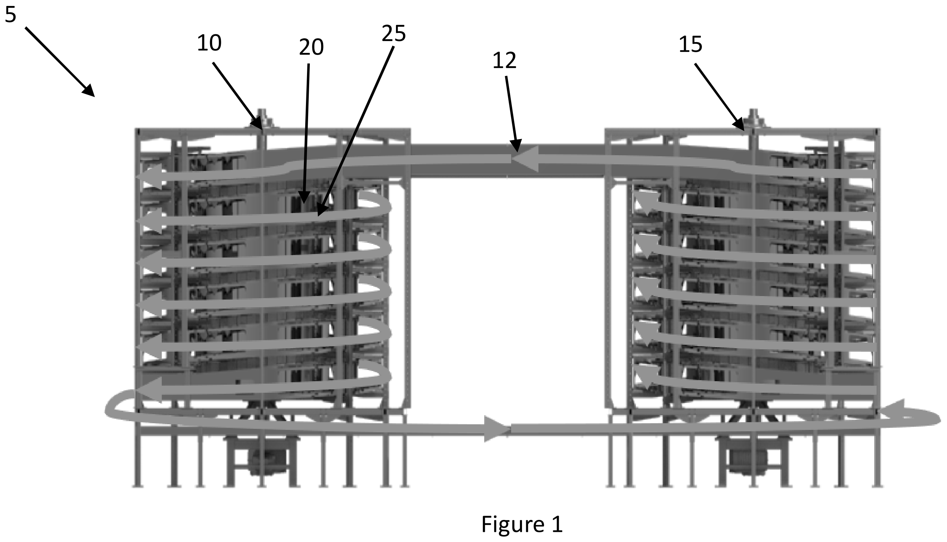

Referring to Figures 1-3, the present invention provides a spiral oven 5 having at least one spiral duct 10. The spiral duct 10 comprises a plurality of zones. Each zone comprises at least one chamber 20. Each of the chambers are assembled sequentially to form a spiral path. Each chamber 20 forms a helical segment of the spiral path. The chamber 20 has an enclosed design to encapsulate a spiral conveyor belt 25 along the spiral path. The spiral oven 5 may comprise a further spiral duct 15 and a bridging duct 12 to bridge the two spiral ducts 10, 15 and allow the conveyor belt 25 to move from one spiral duct to another spiral duct. Each of the spiral ducts 10, 15 may have the same or different number of zones.

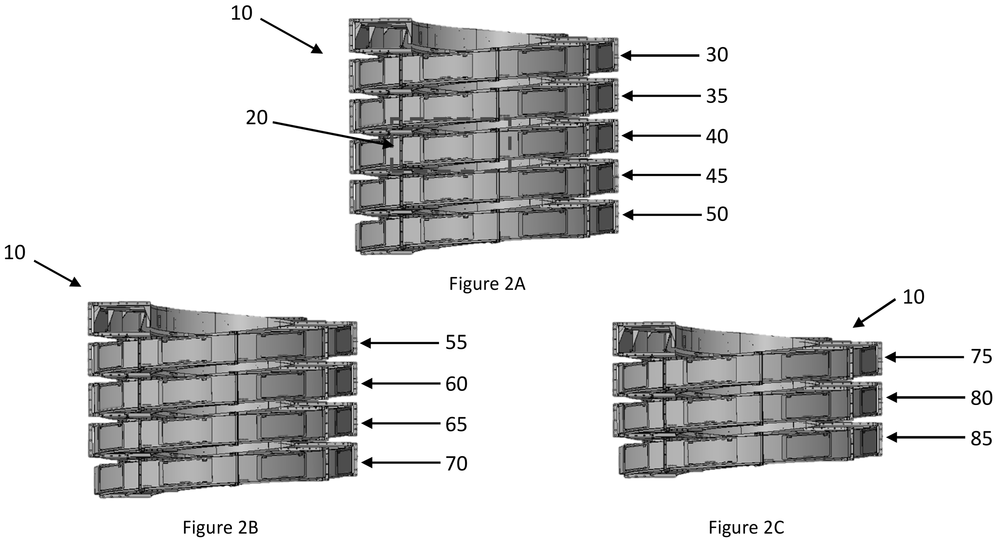

As shown in Figures 2A-2C, the spiral duct may be designed with various numbers of zones such as five zones 30, 35, 40, 45, 50, four zones 55, 60, 65, 70, and three zones 75, 80, 85. Spiral ducts having more or less zones will be apparent to those skilled in the art by simply adding or reducing the zones from the spiral duct.

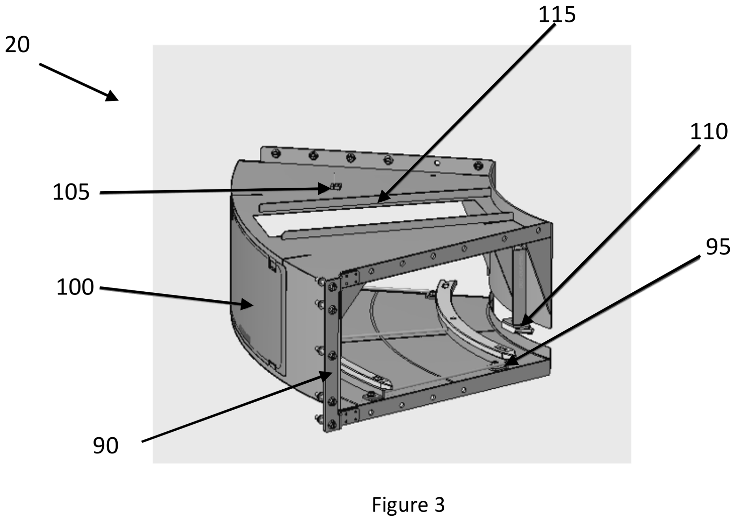

Referring to Figure 3, the chamber 20 may have minimal openings for a track cap mount 95, a duct cover 100, a thermocouple mount 105, an inner guide mount 110, and a belt contact with a drum and fasteners mountings. The chamber 20 further comprises a C-shaped mounting plate 90 to connect the chamber with another chamber. The track cap mount 95 allows the installation of a track cap. The conveyor belt 25 runs on the track cap to transport products or materials to be processed through the spiral path within the spiral oven. The products or materials to be processed may be composite materials, metals, coating of materials or food products. The inner guide mount 110 prevents the conveyor belt 25 from climbing up to ensure that the conveyor belt 25 runs stably. The conveyor belt 25 can be driven up the spiral path with the aid of a drum at the center of the spiral duct. Each of the enclosed chambers 20 has an opening to allow the conveyor belt 25 to move through. The thermocouple mount 105 allows the installation of a thermocouple for measuring the temperature within the chamber 20. The duct cover 100 is attached to the surface of the chamber 20 and covers a duct opening (not shown) of the chamber 20. Moreover, the duct cover 100 is removable and able to be dismantled from the chamber 20 so as to allow a user or an engineer to access the interior of the chamber 20 via the duct opening for maintenance or reparation purposes. Thus, a healthy operating condition of the spiral duct and the spiral oven may be effectively maintained. In the spiral duct, each chamber 20 has a duct cover 100 covering a duct opening. Alternatively, each of a portion of the chambers 20 in the spiral duct has the duct cover 100 covering a duct opening, while the rest of the chambers 20 has an enclosed design without the duct opening and the duct cover 100. In addition, each chamber 20, or each of a portion of the chambers 20 in the spiral duct may further comprises a heating element 115 to heat up the interior of the chamber 20. The heating element may be configured to be interchangeable between radiant heating and UV curing to heat up the interior of the chamber 20, through radiant and/or UV. In addition, the heating element may be a modular heating element. The chamber 20 encloses air surrounding the modular heating element 115. The modular heating elements 115 for each of the chambers 20 can be individually and independently controlled by a control system to heat up each of the chambers 20 to a set temperature.

Specifically, in operation, the modular heating elements 115 in each zone may be switched on at different power rating, depending on the temperature set by the user. Furthermore, the heating elements may be activated to continually generate heat until a set temperature is reached. With this feature, the temperature of each zone can be individually set based on the user's requirement. The enclosed design of the chamber 20 serves as a heat barrier to confine the heated air within the chamber 20. Therefore, the heat transfer from the heated air at the interior of the chamber 20 to the cooler air at its exterior is minimized. Furthermore, the heat transfer between the chambers of different zones is minimized, the zones either being within the same spiral duct or located in different spiral ducts in a spiral oven. Due to the thermal isolation among the chambers 20 from different zones achieved by the enclosed design, together with the independent and localized control of the modular heating elements 115, multiple temperature zones of a spiral oven can be easily achieved with minimal space requirement, and thus with a minimized overall size of the spiral oven.

On the contrary, in the absence of the enclosed chambers and the localized heating by the modular heating elements, the heated air will transfer heat to cooler air to reach thermal equilibrium. In the case that the entire conveyor belt is enclosed within a single housing of an oven without being enclosed by the chambers, the air heated within the single housing will reach the same temperature eventually.

Referring to Figure 1 and Figure 3, in one embodiment, the spiral oven 5 comprises two spiral ducts 10, 15 and total of ten zones, with five zones in each of the spiral ducts 10, 15. Each zone includes eight chambers 20, which are assembled back-to-back to form a spiral path. The five zones in each of the spiral ducts 10, 15 are set with temperatures of 230 °C, 210°C, 190°C, 170°C, 150°C from top to bottom, respectively, creating five temperature zones. This is achieved by switching on the modular heating elements 115 in each zone at different power rating. For the top zone to reach the maximum temperature of 230 °C, the modular heating element 115 will be operating at its full power.

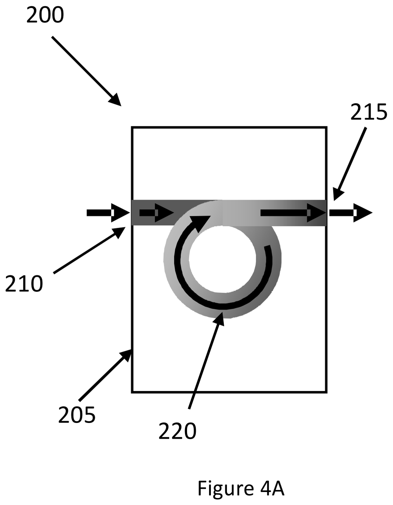

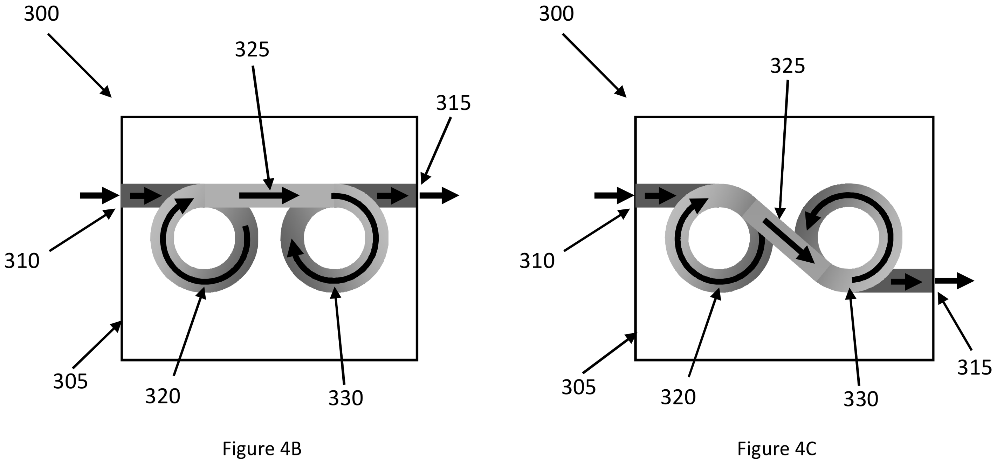

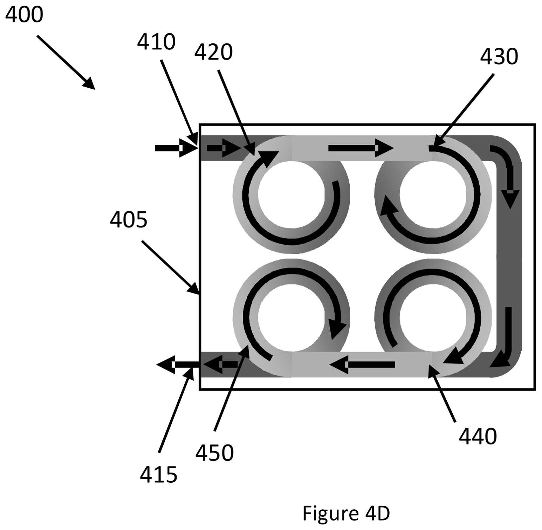

Referring to Figures 4A-4D, the spiral oven 200, 300, 400 may include various numbers of spiral ducts and a housing 205, 305, 405 enclosing the spiral duct(s). The housing 205, 305, 405 includes an entrance 210, 310, 410 connected to the conveyor belt to receive products or materials to be processed by the spiral oven 200, 300, 400, and an exit 215, 315, 415 connected to the conveyor belt to deliver the processed products or materials out of the spiral oven 200, 300, 400. Specifically, Figure 4A shows a spiral oven 200 having only one spiral duct 220. Figures 4B-4C shows a spiral oven 300 including two spiral ducts 320, 330. The Spiral oven 300 further comprises a bridging duct 325 to bridge the two spiral ducts 320, 330. The entrance 310 and the exit 315 of the spiral oven 300 may or may not be aligned with each other as shown in Figure 4B and Figure 4C, respectively. It is apparent to those skilled in the art that other arrangement for the locations of the entrance 310 and exit 320 as well as the bridging duct 325 may be achieved. Referring to Figure 4D, as the enclosed chamber can effectively minimize the heat transfer between the chambers of different zones, the zones either being within the same spiral duct or located in different spiral ducts, four spiral ducts 420, 430, 440, 450 may be provided in a spiral oven 400 with minimized overall size to provide more temperature zones. It is apparent to those skilled in the art, other number of spiral ducts may be provided in the spiral oven.

In operation, the spiral oven of the present invention may be applied to process the coating of a paper product, which requires specific temperature profile to ensure proper curing. The temperature profile comprises the temperatures required for each zone of the spiral oven. The user can set the temperature profile via the control system and may configure the temperatures for each of the zones in an increasing order, starting from the zone the product enters. The highest zone is set with the highest temperature. Preheating may be applied to heat up the zones to a desired temperature range. A coating may be sprayed onto the product before the product entering into the spiral oven. The conveyor belt then transports the product through the chambers along the spiral path. As such, the product is processed by the spiral oven with the configured temperature profile. The condition of the cured coating may be inspected and evaluated after the product being delivered out of the spiral oven and cooled down to room temperature. The inspection may be carried out based on the dryness of the coating using visual inspection.

It is to be understood that the embodiments and features described above should be considered exemplary and not restrictive. Many other embodiments will be apparent to those skilled in the art from consideration of the specification and practice of the invention. Furthermore, certain terminology has been used for the purposes of descriptive clarity, and not to limit the disclosed embodiments of the invention.

## Claims

1. A spiral duct, comprising:
a plurality of enclosed chambers, each of the enclosed chambers assembled sequentially to form a spiral path;
a conveyor belt encapsulated within the plurality of enclosed chambers along the spiral path.

2. The spiral duct according to claim 1, wherein each of at least a portion of the plurality of enclosed chambers has a heating element to heat up the interior of said each of the portion of the plurality of enclosed chambers.

3. The spiral duct according to claim 2, wherein the heating element comprises radiant heating to heat up the interior of said each of the portion of the plurality of enclosed chambers through radiant.

4. The spiral duct according to claim 2 or 3, wherein the heating element comprises UV curing to heat up the interior of said each of the portion of the plurality of enclosed chambers through UV.

5. The spiral duct according to any one of claims 2 to 4, wherein each of the portion of the plurality of enclosed chambers further includes a duct cover removably attached to said each of the portion of the plurality of enclosed chambers, and said duct cover is configured to cover a duct opening of said each of the portion of the plurality of enclosed chambers.

6. The spiral duct according to any one of the preceding claims, wherein each of the plurality of enclosed chambers has an opening to allow the conveyor belt to move through.

7. The spiral duct according to any one of the preceding claims, wherein each of the plurality of enclosed chambers has a C-shaped mounting plate to connect said each of the plurality of enclosed chambers with another enclosed chamber.

8. The spiral duct according to any one of the preceding claims, wherein each of the plurality of enclosed chambers forms a helical segment of the spiral path.

9. A spiral oven having at least one spiral duct according to any one of claims 1 to 8, further comprising:
a housing; said at least one spiral duct enclosed within the housing; and
said housing having an entrance and an exit connected to the conveyor belt.

10. A spiral oven having at least one spiral duct according to any one of claims 2 to 4, further comprising:
a housing; said at least one spiral duct enclosed within the housing;
said housing having an entrance and an exit connected to the conveyor belt; and
a control system configured to individually control the heating element.
